# EUROPÄISCHE PATENTSCHRIFT

(11) **EP 0 428 883 B1**
(45) Veröffentlichungstag und Bekanntmachung des Hinweises auf die Patenterteilung: **04.08.1993**
(21) Anmeldenummer: 90120302.6
(22) Anmeldetag: 23.10.1990
(51) Int. Cl.: B65B 1/46

(54) **Verfahren und Vorrichtung zum Verpacken von pastösen Produkten, wie Suppenpasten, Margarine, Butter oder dgl. in Form von Päckchen, Würfeln oder dgl.**
Method of and apparatus for packaging of pasty products such as soup paste, margarine, butter or the like in the form of packages, cubes or the like
Procédé et dispositif pour emballer des produits pâteux, tels que pâtes pour la soupe, margarine, beurre ou similaires en forme de paquets, cubes ou similaires

(30) Priorität: 17.11.1989 DE 3938220
(43) Veröffentlichungstag der Anmeldung: 29.05.1991
(73) Patentinhaber: Benz & Hilgers GmbH, 40470 Düsseldorf (DE)
(72) Erfinder: Böhm, Jürgen, Dr., W-4044 Kaarst 2 (DE)
(74) Vertreter: Pfeiffer, Helmut, Dipl.-Ing.

(56) Entgegenhaltungen:
- GB-A- 724 527
- PACKAGING DIGEST, Band 32, Dezember 1961, Seiten 54-58; "New powder-filling plant with ingenious weight-control system"

## Beschreibung

Die Erfindung bezieht sich zunächst auf ein Verfahren zum Verpacken von pastösen Produkten, wie Suppenpasten, Margarine, Butter oder dgl. in Form von Päckchen, Würfeln oder dgl. mit Überwachung und Beeinflussung des Gewichts der Päckchen, Würfel oder dgl. durch einen geschlossenen Regelkreis und einen Gewichts-Verstellantrieb.

Beim Verpacken von Produkten in Form von Päckchen, Würfel oder dgl. ist es seit langem bekannt, das Gewicht des abzufüllenden Produktes über Regelkreise mehr oder weniger laufend zu kontrollieren und bei Abweichungen von einem voreingegebenen Sollwert eine entsprechende Korrektur der Produktabgabe durchzuführen. Dies geschieht dadurch, daß die Bewegung eines Dosierkolbens oder eines Preßstempels durch Endschalter, Kurvensteuerung oder dgl. genau kontrolliert und über eine entsprechende Steuerung der Dosier- bzw. Preßvorgang beendet wird. Ordnet man eine Wiegeeinrichtung innerhalb der Verpackungsmaschine an, so ist aufgrund des dynamischen Verhaltens der im Takt oder kontinuierlich arbeitenden Verpackungsmaschine eine genaue Wägung und damit die Erzielung eines exakten Wertes kaum möglich. Abweichungen sind vor allen Dingen dann nachteilig, wenn es sich um wenige Gramm wiegende Packungen, Würfel oder dgl. handelt. Ordnet man hingegen die Wiegeeinrichtung außerhalb der Verpackungsmaschine, z. B. in Förderrichtung der Päckchen, Würfel oder dgl. gesehen, hinter der Verpackungsmaschine an, so ist die Wiegeeinrichtung in der Regel zu weit von der Dosier- oder Preßstation der Verpackungsmaschine entfernt, so daß eine etwaige Korrektur zu spät erfolgt, mithin der Ausschuß zu hoch ist.

Aus "Packaging Digest", Band 32, Dezember 61, Seiten 54 bis 58 ist zum genauen Abpacken von pulverförmigen Produkten, wie z. B. Waschpulver, eine kombinierte Anordnung einer Füllniveau- und Gewichtskontrolle bekanntgeworden. Dabei werden in einem ersten Schritt mit Hilfe eines Niveau-Dektors in Form von Beta-Strahlung das Füllstandsniveau des in einem Kartonbehälter abgefüllten Produktes festgestellt. Nicht ordnungsgemäß befüllte Kartonbehälter werden durch einen elektromagnetischen Ejektor ausgestoßen und gleichzeitig kann eine Bedienungsperson eine entsprechende Nachregelung von Füllkammern vornehmen. Während durch den Niveau-Dektor unzureichend gefüllte Kartonbehälter eliminiert werden, kann in einem zweiten Schritt durch eine unmittelbar hinter der Niveaukontrolleinrichtung angeordnete Gewichtskontrolleinrichtung jeweils ein Kartonbehälter gewogen und dadurch festgestellt werden, ob sich die Dichte des abgefüllten Produktes verändert hat. Dies geschieht im einzelnen dadurch, daß aus einer Reihe von einzeln aufeinanderfolgenden, den Niveau-Dektor passierten Kartonbehältern ein Behälter zwecks Gewichtskontrolle auf eine Wiegeplatte ausgestoßen wird. In die auf diese Weise jeweils entstehende Lücke in der Packungsreihe wird ein Behälter eingeschoben, der bei einem vorgehenden Zyklus in eine Warteposition geschoben worden ist.

Bei dem vorstehend beschriebenen Füll- und Kontrollsystem können die Kartonbehälter jeweils nur einzeln nacheinander auf einwandfreie Füllstandshöhe überprüft werden. Außerdem ist das Wiegen jeweils eines einzigen Kartonbehälters umständlich und im Hinblick auf das Wiederauffüllen der entstandenen Lücke in der Packungsreihe durch den zum Wiegen vorgesehenen Kartonbehälter aufwendig. Schließlich ist durch die Anordnung der Wiegeeinrichtung unmittelbar hinter der Füllstandsüberwachungseinrichtung, also innerhalb der Maschine, aufgrund deren nicht zu vermeidenden Schwingungen eine genaue Wiegung kaum möglich.

Der Erfindung liegt die Aufgabe zugrunde, ein Verfahren zum Verpacken von pastösen Produkten, wie Suppenpasten, Margarine, Butter oder dgl. in Form von Päckchen, Würfeln oder dgl. mit Überwachung und Beeinflussung des Gewichtes der Päckchen, Würfel oder dgl. durch einen geschlossenen Regelkreis vorzuschlagen, durch das bei Abweichungen von einem voreingegebenen Sollwert auf einfache Weise sehr rasch eine wesentliche Verbesserung der Genauigkeit und Qualität der Päckchen, Würfel oder dgl. erreicht wird. Ferner liegt der Erfindung die Aufgabe zugrunde, eine Vorrichtung zum Durchführen des Verfahrens zu schaffen, durch die die Nachteile der bekannten Einrichtungen bzw. Füllstandskontrollsysteme vermieden wird.

Die der Erfindung zugrundeliegende Aufgabe wird nach einem ersten Verfahren dadurch gelöst, daß die Höhe bzw. Dicke der Päckchen gemessen und der dabei festgestellte Istwert der Päckchen nach digitaler Umformung mit einem voreingegebenen, von der Höhe bzw. Dicke umgerechneten Sollwert für das Gewicht in einem Steuergerät verglichen wird und bei Abweichungen des Istwertes vom Sollwert die Produktabgabe entsprechend verändert wird und daß schließlich eine gesonderte, überlagerte Überprüfung des Gesamtgewichts mehrerer in einer Packung zusammengefaßter Päckchen, Würfel oder dgl. durchgeführt wird und bei abweichendem Gewicht vom Sollwert eine automatische Korrektur des Sollwertes erfolgt.

Durch die Erfindung erhält man einen selbsttätigen Regelkreis mit Rückführung bzw. Selbstkorrektur des Sollwertes, d. h. die Regelung paßt sich immer dem gewünschten Gewicht der Päckchen innerhalb zulässiger Grenzen an. Auf diese Weise erhält man Päckchen, Würfel oder dgl. mit sehr engen Maßtoleranzen bei ständig gleichbleibender Qualität bezüglich der Dichte. Es entsteht nur sehr wenig Ausschuß, da die Regelung sehr schnell ist und innerhalb eines definierten Bereichs jede Abweichung rasch korrigiert. Es bleibt unbenommen, bei Über- oder Unterschreiten der Intervallgrenzen besondere Vorkehrungen zu treffen, wie z. B. Fehlermeldungen über eine Textanzeige am Steuergerät, Abschalten der Vorrichtung usw. Grundsätzlich übt der Regelkreis, bis auf die Korrektur des Gewichts-Verstellantriebs keinen direkten Einfluß auf den Gesamtprozeß der Verpackungsmaschine aus.

Nach einem anderen Verfahren kann bei Verpackungsmaschinen mit verstellbarem Zellenboden bei Abweichungen vom Sollwert anstatt dessen Korrektur eine Korrektur der Lage des Zellenbodens erfolgen.

Es hat sich als besonders vorteilhaft herausgestellt, wenn der ermittelte Istwert aus einer arithmetischen Mittelwertbildung über eine durch einen Zähler festgehaltene, vorbestimmbare Anzahl von Messungen gebildet und zur Ermittlung des Wertes der physikalischen Regelgröße mit einem Umrechungsfaktor multipliziert wird.

Durch die nach jeder Einlesung in den Speicher des Steuergeräts erfolgenden Inkrementierung wird der aktuelle Zählerstand mit einer softwaremäßig definierten Konstanten verglichen. Bei Gleichheit wird der aktuelle Speicherinhalt der Speicherstelle durch den Wert der Konstanten dividiert. Der so erhaltene arithmetische Mittelwert des Päckchendicken-Zyklus wird mit dem dem jeweils zu verpackenden Produkt zugeordneten Umrechnungsfaktor multipliziert, so daß der Wert für die physikalische Meßgröße entsteht.

Durch die vorbeschriebenen Maßnahmen werden Meßfehler bzw. -ungenauigkeiten weitgehend ausgeschaltet.

Weiterhin wird erfindungsgemäß vorgeschlagen, daß der sich aus dem Istwert/Sollwert-Vergleich ergebende Differenzwert der Regelabweichung unter Berücksichtigung eines Multiplikationsfaktors zur zeitlichen Verstellung des Gewichts-Verstellantriebs herangezhogen wird. Hierdurch läßt sich die Einwirkzeit auf die Einstellung der Zuteilvorrichtung exakt bestimmen. Unter Zuteilvorrichtung sind Dosierelemente, wie z. B. Schnecken oder dgl. zu verstehen. Bei einer erforderlichen Regelung wird z. B. die Umdrehungszahl der Schnecken geändert.

In weiterer Ausgestaltung der Erfindung ist vorgesehen, daß die gesonderte Überprüfung des Gewichtes erst nach Einbringung der einzelnen Päckchen, Würfel oder dgl. in eine Faltschachtel und über alle in der Faltschachtel zusammengefaßte Päckchen, Würfel oder dgl. stattfindet, und daß bei abweichendem Gesamtgewicht trotz Einhaltung der Höhe bzw. Dicke der einzelnen Päckchen zum vorgegebenen Sollwert, gegebenenfalls unter Berücksichtigung eines frei wählbaren Waagenbewertungsfaktors, der Sollwert entsprechend korrigiert wird. Durch diesen Verfahrensschritt wird das Gesamtgewicht aller in eine Faltschachtel untergebrachter Päckchen, Würfel oder dgl. unmittelbar zur Korrektur des eingegebenen Sollwertes ausgenutzt. Dabei wird das Gesamtgewicht der Päckchen, Würfel oder dgl. festgestellt, durch die Anzahl der gewogenen Päckchen, Würfel oder dgl. dividiert und dann der so errechnete Wert, der die Sollwertabweichung in Gramm pro Päckchen, Würfel oder dgl. darstellt, mit dem Waagenbewertungsfaktor multipliziert. Das Endergebnis stellt die Korrektur des Sollwertes dar.

Eine geeignete Vorrichtung zum Durchführen des Verfahrens mit einer mit einem Steuergerät verbundenen Meßvorrichtung zeichnet sich dadurch aus, daß die Meßvorrichtung in einem geschlossenen Regelkreis zur automatischen Gewichtsüberwachung eine Vorrichtung zum Messen des Istwertes der Höhe bzw. Dicke der einzelnen Päckchen sowie eine der Vorrichtung zur Höhen- bzw. Dickenmessung nachgeschaltete Wiegevorrichtung zur Ermittlung des Gesamtgewichtes mehrerer in einer Packung zusammengefaßter Päckchen, Würfel oder dgl. aufweist.

Die Meßvorrichtung besitzt mithin eine Meßeinrichtung für die Dicken- und Höhenmessung und gleichzeitig ein Meßgerät für das Gesamtgewicht mehrerer in einer Packung zusammengefaßter, vorzugsweise das Gesamtgewicht aller in einer Faltschachtel zusammengefaßter Päckchen, Würfel oder dgl. mit der Möglichkeit einer vorzugsweise elektrischen Überlagerung der beiden Korrektureinflüsse auf die Zustellvorrichtung, d. h. den Gewichts-Verstellantrieb. Zur Messung der Dicke bzw. Höhe der Päckchen, Würfel oder dgl. eignen sich übliche Meßgeräte, wie z. B. Potentiometer. Besser sind jedoch Positionsgeber in Gestalt von berührungslos arbeitenden Sensoren, wie z. B. Ultraschallsensoren. Es eignen sich auch Laser-Abstandssensoren, die für den hier gezeigten speziellen Anwendungsfall einen Signalverarbeitungsteil und einen Meßteil in Form einer Leiste aufweisen.

Zur baulichen Vereinfachung können bei Vorrichtungen zum Verpacken von Päckchen, Würfeln oder dgl. in mehreren nebeneinanderliegenden Reihen der Signalverarbeitungsteil sowie die Meßleiste jeweils paarweise nebeneinanderliegenden Reihen zugeordnet sein.

Es ist von Vorteil, wenn die Vorrichtung zur Höhen- und Dickenmessung innerhalb der Vorrichtung zum Verpacken, also z. B. innerhalb einer Einwicklermaschine und vorzugsweise im Bereich einer der Dosierstation nachgeschalteten Preßstation angeordnet ist und wenn die Wiegevorrichtung außerhalb der Vorrichtung zum Verpacken, also außerhalb der Maschine angeordnet ist. Hierdurch wird einmal erreicht, daß die Höhen- und Dickenmessung unmittelbar nach der Dosierung erfolgt, wordurch auch die Zuordnung zwischen der Dosierstation und dem dosierten Gewicht gewährleistet ist, andererseits das Wiegen der Päckchen ohne Beeinflussung durch irgendwelche Vibrationen der Maschine außerhalb dieser vorgenommen werden kann.

Ein bevorzugtes Ausführungsbeispiel der Erfindung ist in der Zeichnung dargestellt und wird im folgenden näher erläutert. Es zeigen in jeweils schematischer Darstellung:
- Fig. 1: eine Vorderansicht einer Verpackungsmaschine mit einer erfindungsgemäß ausgebildeten Meßvorrichtung,
- Fig. 2: die zugehörige Draufsicht mit angeschlossenem Steuergerät
- Fig. 3: eine Einzelheit der Meßvorrichtung in vergrößertem Maßstab in der Seitenansicht
- Fig. 4: einen Regelkreis mit Korrektur über den Sollwert und
- Fig. 5: einen Regelkreis mit Korrektur der Lage eines verstellbaren Zellenbodens.

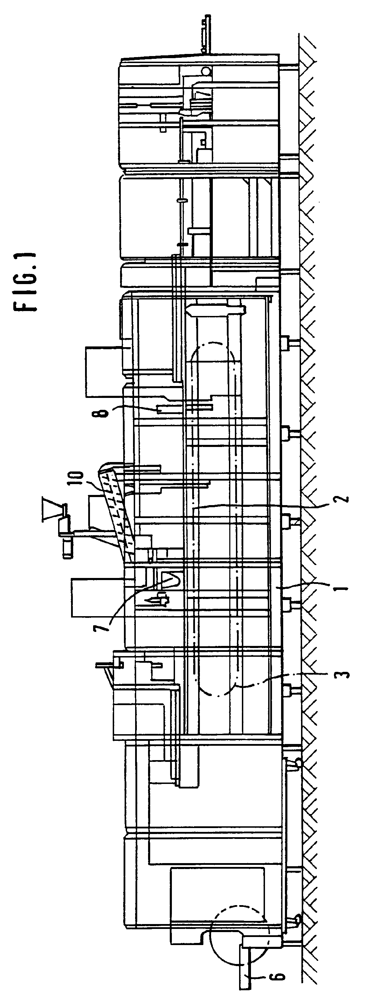

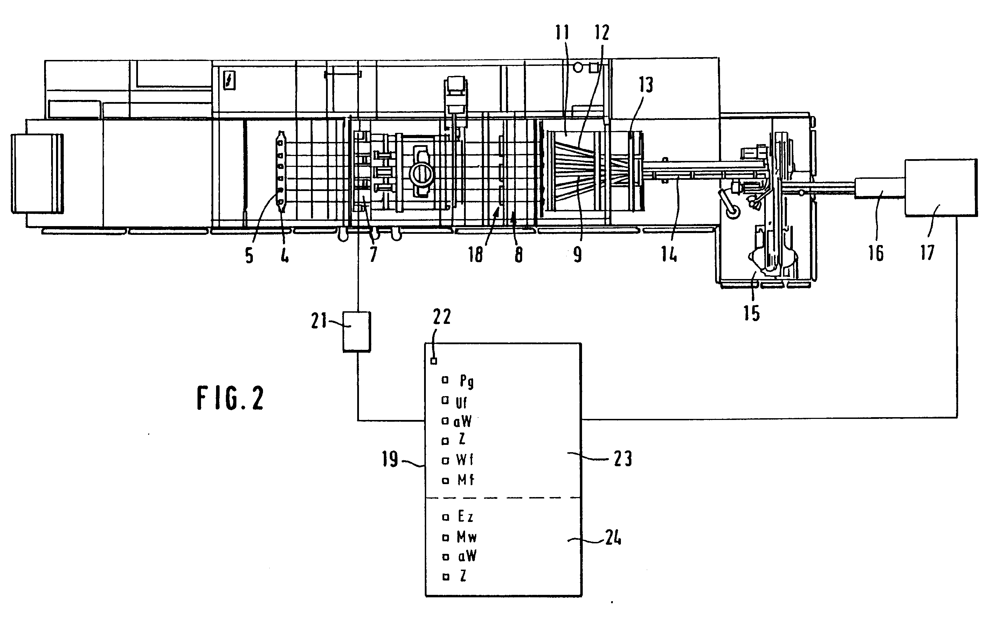

In Fig. 1 und 2 ist eine Verpackungsmaschine als Einwicklermaschine dargestellt, die innerhalb des Maschinengestells 1 eine Fördereinrichtung 2 mit endlos umlaufenden, mit Abstand zueinander angeordneten Ketten 3 oder dgl. aufweist. Zwischen den gegenüberliegenden Ketten 3 sind Zellenleisten 4 eingespannt, die im dargestellten Ausführungsbeispiel sechs mit Abstand zueinander angeordnete Zellen 5 aufweisen. Die Einwicklermaschine besitzt eine Papierabrollung 6 zur Bildung von Einwickler-Zuschnitten, die vor dem Einbringen des Produktes in die Zellen eingelegt werden. Neben weiteren Arbeitsstationen besitzt die Maschine eine Dosierstation 7, deren Dosierschnecken 10 in Fig. 1 schematisch angedeutet sind, sowie mit Abstand in Förderrichtung nachfolgend eine Preßstation 8. In der Dosierstation wird ein pastöses Produkt, wie z. B. Suppenpaste, Margarine, Butter oder dgl. in die mit den Einwickler-Zuschnitten ausgelegten Zellen 5 der Zellenleisten eingebracht, worauf das so eingefüllte Gut dann bis in die Preßstation gelangt und hier unter Zusammenfalten des Einwickler-Zuschnittes zu Mini-Päckchen, Würfel oder dgl. von ca. 12 g Gewicht gepreßt wird. Nach der Preßstation folgt eine Zusammenführ- und wendestation 9 mit in einem Führungstisch 11 angeordneten, schrägverlaufenden Führungsnuten 12 sowie einem Oberläufer 13 mit nicht dargestellten Mitnehmern. Durch diese Zusammenführ- und wendestation 9 werden die z. B. in Längsrichtung ankommenden Päckchen, Würfel oder dgl. im weiteren Verlauf der Maschine nicht nur enger zusammengeführt sondern auch gleichzeitig in Querrichtung gewendet. Die so in neuer Formation zusammenliegenden Päckchen, Würfel oder dgl. gelangen dann über eine Weiterleitungsstation 14 zu einem Packer 15, in dem die Päckchen, Würfel oder dgl. in bekannter Weise gruppenweise zu mehreren in eine Faltschachtel eingebracht werden. Im beschriebenen Ausführungsbeispiel wird davon ausgegangen, daß acht Päckchen bzw. Würfel oder dgl. in einer Packung zusammengefaßt sind. Hinter dem Packer 15 ist ein Abtransport 16 angeschlossen. Im Bereich des Abtransportes 16 ist eine Wiegevorrichtung 17 angeordnet, mit der in weiter unten näher beschriebener Weise alle in einer Faltschachtel zusammengefaßten Päckchen bzw. Würfel oder dgl. gleichzeitig gewogen werden können.

Die Wiegevorrichtung 17 ist Teil einer Meßvorrichtung eines geschlossenen Regelkreises zur automatischen Gewichtsüberwachung. Dazu gehört eine weitere Meßvorrichtung 18 im Bereich der Preßstation 8 sowie ein damit und mit der Wiegevorrichtung 17 verbundenes Steuergerät 19, das eine modulare speicherprogrammierte Steuerung aufweist. Schließlich steht das Steuergerät 19 noch mit einem Gewichts-Verstellantrieb 21 der Dosiereinrichtung der Verpackungsmaschine in Verbindung. Die zur Steuerung bzw. Regelung erforderlichen Leitungen sind nur schematisch angedeutet. Das Steuergerät 19 besitzt neben einem zentralen Schlüsselschalter 22 einen Einstellbereich 23 sowie einen Anzeigebereich 24. Im Einstellbereich können verschiedene Einstellparameter eingestellt werden und zwar die Sollwerte für das Gewicht eines Einzelpäckchens Pg (z.B. 11,6 g), ein Umrechnungsfaktor Uf (z.B. 0,75 für klare Fleischsuppe), die auszublendenen Würfel Aw, ein Zähler Z, sowie Werte für einen Waagenbewertungsfaktor Wf (z.B. 100 %) und einen Multiplikationsfaktor Mf (z.B. 50 %). Im Anzeigebereich 24 lassen sich verschiedene Werte anzeigen und zwar das Einzelgewicht Ez eines Päckchens, ein Mittelwert Mw, wiederum ein auszublendender Würfel Aw und ein Zähler Z. Die vorstehend aufgeführten Begriffe werden weiter unten näher erläutert und zwar im Zusammenhang mit der Funktion der Vorrichtung.

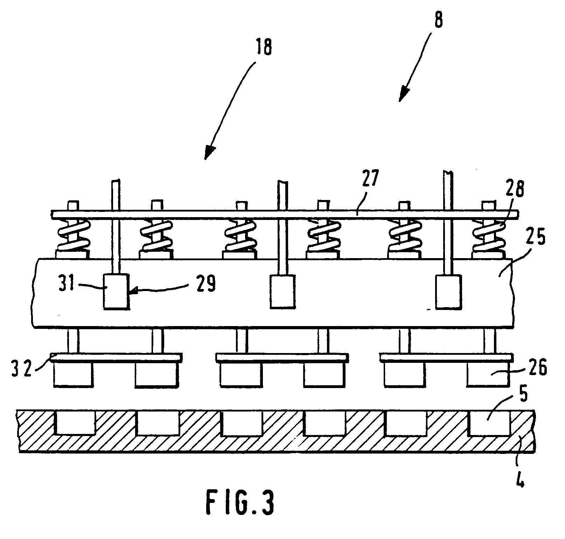

Die im Bereich der Preßstation angeordnete Meßvorrichtung 18 ist in Fig. 3 näher dargestellt. Wie daraus hervorgeht, sind an einem feststehenden Rahmenteil 25 der Verpackungsmaschine Preßstempel 26 der Preßstation 8 hin- und herbeweglich gelagert. Die Preßstempel 26 wirken mit den Zellen 5 in den Zellenleisten 4 zusammen. Die Preßstempel sind an ihrem den Zellen 5 abgewandten Ende über eine Verbindungsstange 27 miteinander verbunden und jeweils über eine Feder 28 gegenüber dem Rahmenteil 25 abgestützt. Im Bereich jeweils zweier benachbart zueinander liegender Preßstempel ist jeweils ein Laser-Abstandssensor 29 angeordnet, der aus einem am Rahmenteil 25 befestigten Signalverarbeitungsteil 31 und aus einer Leiste 32 besteht. Die Leiste ist jeweils an den beiden nebeneinanderliegenden hin- und hergehenden Preßstempeln 26 befestigt. Mit Hilfe dieser Meßeinrichtung läßt sich auf optischem Wege der jeweilige Abstand zwischen dem Signalverarbeitungsteil und der Leiste 32 und damit die jeweilige Dicke bzw. Höhe der Päckchen exakt messen. Der auf diese Weise in unten näher beschriebener Weise ermittelte Istwert kann dann in der Steuerung des Steuergerätes 19 verarbeitet werden.

Die erfindungsgemäß ausgebildete Vorrichtung mit der automatischen Regeleinrichtung arbeitet wie folgt:

Nachdem die Einwickler-Zuschnitte in die Zellen 5 eingelegt und letztere durch Dosierschnecken oder entsprechende Dosieraggregate der Dosierstation 7 gefüllt sind, werden die Zellenleisten 4 im Takt der Maschine (z.B. 150 Takte/Min.) durch die Fördereinrichtung 2 weiter nach rechts bewegt, bis die Produkte unter die Preßstation 8 gelangen. Hier wird nach Vorfaltung der Einwickler-Zuschnitte das Produkt zu Mini-Päckchen, Würfel oder dgl. gepreßt. Die jeweilige Dicke bzw. Höhe der Päckchen entspricht einer bestimmten Stellung der Leiste 32 der Laser-Abstandssensoren, so daß mit den nach dem Triangulationsverfahren arbeitenden Laser-Abstandssensoren stetig ein analoges Spannungssignal erfaßt wird, welches der Steuerung im Steuergerät 19 zugeführt wird. Der zu verarbeitende Spannungshub liegt als Intervall z. B. im Bereich 0 bis 10 V und weist einen sinusförmigen Verlauf auf, der eine maximale Frequenz von 2,5 Hz hat. Einem "dicken" und damit "schweren" Päckchen entspricht ein erster bestimmter Spannungswert, während einem "dünnen" und damit "leichten" Päckchen ein zweiter Spannungswert entspricht. Mit anderen Worten heißt dies, daß der gemessene Istbetrag proportional der als Regelgröße dienenden Päckchendicke und somit der Würfelmasse m ist.

Zur Vermeidung von Meßfehlern und Meßungenauigkeiten ist durch das Steuerungsprogramm eine zyklische Wertabfrage der Maxima erforderlich. Bei zyklischen Wertabfragen innerhalb von z.B. 3 bis 5 ms, maximal 10 ms und einer Mittelwertbildung für die Istwerterfassung ist der aufgrund der zyklischen Abfrage entstehende Fehler in bezug auf die angestrebte und auch erzielte Massentoleranz von +/- 0,1 g vernachlässigbar.

Der ermittelte Istwert wird mit einem über die Bedienkonsole digital einzustellenden Sollwert, z. B. 12,0 g verglichen. Je nach Größe und Vorzeichen der entstehenden Differenz wird unter Berücksichtigung einer prozentualen Bewertung (0 bis 100 %) eingehend als Multiplikationsfaktor Mf von 0 bis 1 ein in zeitlicher Abhängigkeit stehendes Signal ausgegeben, wobei im einen Fall das Gewicht reduziert und im anderen Fall das Gewicht erhöht wird. Die Einschaltung des Gewichts-Verstellantriebs durch das Signal erfordert eine Mindestsignallänge. Nach Abschluß eines weiteren Meßzyklus wird wiederum eine Entscheidung unter Berücksichtigung von Ansprechschwelle und prozentualer Bewertung darüber getroffen, ob ein entsprechendes Signal aufgeschaltet werden soll.

Zu dem bisher beschriebenen Gewichtsregelkreis wird im Regelprozeß ein von der Wiegevorrichtung 17 ausgehendes Signal zur Korrektur des durch Vorwahlschalter eingegebenen Sollwertes nachgeschaltet. Hierzu wird je nach Vorzeichen der Sollgewichtsabweichung eins von zwei zur Verfügung stehenden Waagen-Ausgangssignalen mit Flankentriggerung der speicherprogrammierten Steuerung über digitale Eingänge zugeführt. Dabei liegt folgender Sachverhalt zugrunde:

Bei abweichendem Packungsgesamtgewicht, d.h. dem Gesamtgewicht der in einer Packung zusammengefaßten Päckchen, Würfel oder dgl. trotz Einhaltung der Päckchenhöhe zum vorgegebenen Sollwert greift die Wiegevorrichtung durch Korrektur auf den Sollwert ein. Dies geschieht in der Weise, daß die Abweichung über ein Zeittor erfaßt und der vorgegebene Sollwert dahingehend korrigiert wird. Der korrigierte Sollwert wird auf der Digitalanzeige des Steuergerätes aktuell angezeigt. Dabei kann ein sogenannter Waagenbewertungsfaktor eingestellt werden, der es möglich macht, bei entsprechender prozentualer Einstellung trotz festgestellter Abweichung keine Korrektur erfolgen zu lassen.

Außerdem ist es möglich, daß ab einer bestimmten Betragsgröße dieser Korrektur, je nach Vorzeichen, d.h. nach Unter- oder Überschreitung ein Ausgang gesetzt wird, der zu einer entsprechenden Fehlermeldung auf der Textanzeige führt.

Darüber hinaus müssen bestimmte Prozeßzustände programmäßig berücksichtigt werden. Die von der Waage erfolgende Sollwertkorrektur soll z. B. nur innerhalb eines definierten Bereiches +/- 2 g zulässig sein. Bei Überschreiten der Intervallgrenzen erfolgt eine Meldung über die Textanzeige, z. B. 10 bis 14 g.

Darüber hinaus soll die Eingriffsmöglichkeit der Gewichtsregelung durch die mechanische Begrenzung des Gewichts-Verstellantriebs eingeschränkt sein. Beim Erreichen von Endschaltern kann nur eine Gewichtskorrektur vom Endschalter weg realisiert werden. Wird vom Regelkreis eine Nachregelung in Richtung mechanischer Anschlag gefordert, wird eine entsprechende Fehlermeldung auf der Textanzeige aktiviert.

Schließlich wird bei Ausfall des Meßsensors oder bei Verlassen des Meßbereichs der Regelvorgang deaktiviert und eine Fehlermeldung ausgegeben.

Die Regelung ist nur aktiv bei laufender Maschine und vorhandenem Produkt.

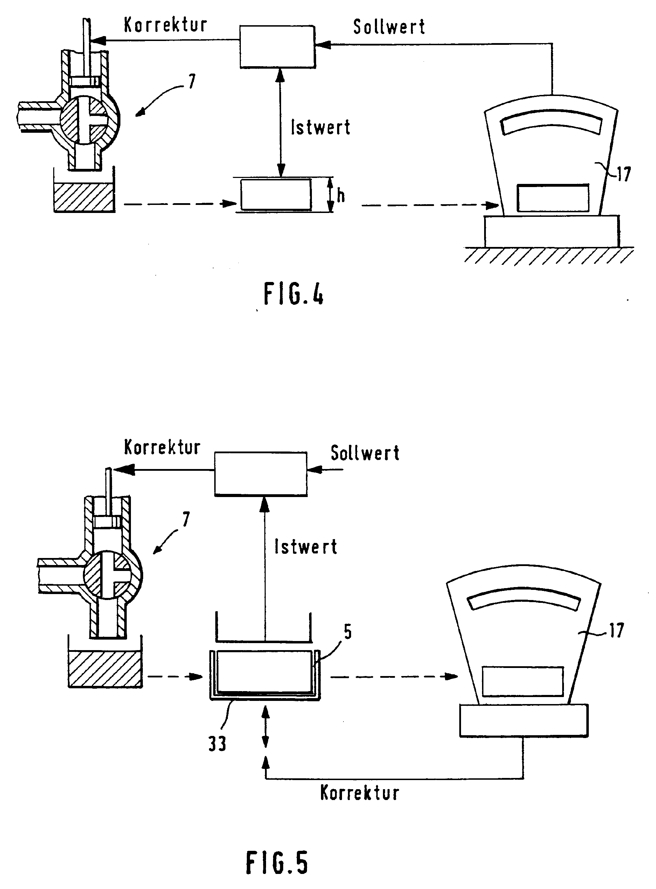

Die oben erläuterte Regelung mit Korrektur über den Sollwert ist in dem in Fig. 4 gezeigten Regelkreis schematisch dargestellt.

In Fig. 5 ist ein Regelkreis mit Korrektur über den verstellbaren Boden 33 der Zelle 5 dargestellt. Bei diesem Niveauregelkreis erfolgt keine automatische Korrektur des Sollwertes, vielmehr wird bei zu geringem Gewicht der Zellenboden 33 über eine Steuereinrichtung und Verstelleinrichtung nach unten und bei zu hohem Gewicht der Zellenboden 33 nach oben bewegt. Die Steuerung der Gewichtsverstelleinrichtung bzw. Dosiereinrichtung wird dabei von der Abstandsmessung beeinflußt, d.h. von dem jeweiligen Abstand zwischen dem Sensor und der Oberfläche des Päckchens, Würfels oder dgl. Wird also an der Wiegevorrichtung 17 trotz "richtiger" Höhe des Päckchens ein zu geringes Gewicht festgestellt, so wird aufgrund des dadurch ausgelösten Signals der Zellenboden 33 entsprechend nach unten bewegt. Dadurch gelangt auch das dort befindliche Päckchen selbst und damit dessen Oberfläche auf ein tieferes Niveau, mit der Folge, daß durch den Istwert/Sollwert Vergleich eine entsprechende Nachregelung ausgelöst wird. Die Produktzufuhr bleibt so lange aufrechterhalten, bis das dem Sollwert entsprechende Niveau wieder erreicht ist. Der sinngemäß gleiche Verfahrensschritt läuft ab, wenn das ermittelte Gewicht an der Wiegeeinrichtung zu hoch ist.

Selbstverständlich kommt anstelle des verstellbaren Zellenbodens auch ein Gegenstempel, z.B. ein Unterstempel oder ein Gegenkolben in Frage, um die gegebenenfalls erforderliche Verstellung der Auflagefläche der Päckchen, Würfel oder dgl. zu ermöglichen.

## Patentansprüche

1. Verfahren zum Verpacken von pastösen Produkten, wie Suppenpasten, Margarine, Butter oder dgl. in Form von Päckchen, Würfeln oder dgl. mit Überwachung und Beeinflussung des Gewichts der Päckchen durch einen geschlossenen Regelkreis und einen Gewichts-Verstellantrieb, **dadurch gekennzeichnet**, daß die Höhe bzw. Dicke der Päckchen gemessen und der dabei festgestellte Istwert nach digitaler Umformung mit einem voreingegebenen, von der Höhe bzw. Dicke umgerechneten Sollwert für das Gewicht in einem Steuergerät verglichen wird und bei Abweichungen des Istwertes vom Sollwert die Produktabgabe entsprechend verändert wird und daß schließlich eine gesonderte, überlagerte Überprüfung des Gesamtgewichts mehrerer in einer Packung zusammengefaßter Päckchen, Würfel oder dgl. durchgeführt wird und bei abweichendem Gewicht vom Sollwert eine automatische Korrektur des Sollwertes erfolgt.

2. Verfahren zum Verpacken von pastösen Produkten, wie Suppenpasten, Margarine, Butter oder dgl. in Form von Päckchen, Würfeln oder dgl. mit Überwachung und Beeinflussung des Gewichts der Päckchen durch einen geschlossenen Regelkreis und einen Gewichtsverstellantrieb, **dadurch gekennzeichnet**, daß die Höhe bzw. Dicke der in Zellen mit verstellbarem Boden befindlichen Päckchen, Würfel oder dgl. gemessen und der dabei festgestellte Istwert nach digitaler Umformung mit einem voreingegebenen, von der Höhe bzw. Dicke umgerechneten Sollwert für das Gewicht in einem Steuergerät verglichen wird und bei Abweichungen des Istwertes vom Sollwert die Produktabgabe entsprechend verändert wird und daß schließlich eine gesonderte, überlagerte Überprüfung des Gesamtgewichts mehrerer in einer Packung zusammengefaßter Päckchen, Würfel oder dgl. durchgeführt wird und bei abweichendem Gewicht vom Sollwert eine automatische Korrektur der Lage des Zellenbodens erfolgt.

3. Verfahren nach Anspruch 1 oder 2, **dadurch gekennzeichnet**, daß der ermittelte Istwert aus einer arithmetischen Mittelwertbildung über durch einen Zähler festgehaltene vorbestimmbare Anzahl von Messungen gebildet und zur Ermittlung des Wertes der physikalischen Regelgröße mit einem Umrechnungsfaktor multipliziert wird.

4. Verfahren nach einem oder mehreren der Ansprüche 1 bis 3, **dadurch gekennzeichnet**, daß der Istwert der Höhen der Päckchen, Würfel oder dgl. als Mittelwert mechanisch aus den Höhen zweier nebeneinanderliegender Päckchen gebildet wird und daß dieser Mittelwert zur arithmetischen Mittelwertbildung für hintereinanderliegende Päckchenpaare herangezogen wird.

5. Verfahren nach einem oder mehreren der Ansprüche 1 bis 4, **dadurch gekennzeichnet**, daß der sich aus dem Istwert/Sollwert-Vergleich ergebende Differenzwert der Regelabweichung unter Berücksichtigung eines Multiplikationsfaktors zur zeitlichen Verstellung des Gewichts-Verstellantriebs herangezogen wird.

6. Verfahren nach einem oder mehreren der Ansprüche 1 bis 5, **dadurch gekennzeichnet**, daß die Besonderte Überprüfung des Gewichts erst nach Einbringung der einzelnen Päckchen, Würfel oder dgl. in eine Faltschachtel und über alle in der Faltschachtel zusammengefaßten Päckchen, Würfel oder dgl. stattfindet, und daß bei abweichendem Gesamtgewicht trotz Einhaltung der Höhe bzw. Dicke der einzelnen Päckchen zum vorgegebenen Sollwert, gegebenenfalls unter Berücksichtigung eines frei wählbaren Waagenbewertungsfaktors, der Sollwert entsprechend korrigiert wird.

7. Vorrichtung zum Verpacken, inbesondere Einwicklermaschine, zum Verpacken von pastösen Produkten, wie Suppenpasten, Margarine, Butter oder dgl. in Form von Päckchen, Würfeln oder dgl. mit einer Regeleinrichtung, die eine Meßvorrichtung (18) zum Feststellen der Abweichung zumindest eines gemessenen Istwertes von einem Sollwert aufweist, wobei die Meßvorrichtung (18) mit einem Steuergerät (19) verbunden ist, welches mit einem Gewichts-Verstellantrieb (21) derart zusammenwirkt, daß im Umfang der gemessenen Abweichung eine Korrektur der Produktabgabemenge bzw. des Füllgewichtes erfolgt zum Durchführen des Verfahrens nach einem oder mehreren der Ansprüche 1 bis 6, **dadurch gekennzeichnet**, daß die Meßvorrichtung in einem Beschlossenen Regelkreis zur automatischen Gewichtsüberwachung eine Vorrichtung (18) zum Messen des Istwertes der Höhe bzw. Dicke der einzelnen Päckchen, Würfel oder dgl. sowie eine der Vorrichtung zur Höhen- bzw. Dickenmessung nachgeschaltete Wiegevorrichtung (17) zur Ermittlung des Gesamtgewichtes mehrerer in einer Packung zusammengefaßter Päckchen, Würfel oder dgl. aufweist.

8. Vorrichtung nach Anspruch 7, **dadurch gekennzeichnet**, daß die Vorrichtung (18) zur Höhen- bzw. Dickenmessung einen Positionsgeber in Gestalt eines berührungslos arbeitenden, vorzugsweise optisch arbeitenden Sensors (29) aufweist.

9. Vorrichtung nach Anspruch 8, **dadurch gekennzeichnet**, daß der Sensor als Laser-Abstandssensor (29) ausgebildet ist und einen an einem Rahmenteil (25) der Vorrichtung angeordneten Signalverarbeitungsteil (31) und einen Meßteil (32) in Form einer an wenigstens einem beweglich gelagerten Preßstempel (26) der Vorrichtung befestigten Leiste aufweist.

10. Vorrichtung nach Anspruch 9 mit mehreren nebeneinanderliegenden Reihen abzupackender Päckchen, Würfel oder dgl. **dadurch gekennzeichnet**, daß der Signalverarbeitungsteil (31) sowie die Leiste (32) jeweils paarweise nebeneinanderliegenden Reihen zugeordnet sind.

11. Vorrichtung nach einem oder mehreren der Ansprüche 7 bis 10, **dadurch gekennzeichnet**, daß die Vorrichtung (18) zur Höhen- bzw. Dickenmessung innerhalb der Vorrichtung zum Verpacken, vorzugsweise im Bereich einer der Dosierstation (7) nachgeschaltenen Preßstation (8) angeordnet ist.

12. Vorrichtung nach einem oder mehreren der Ansprüche 7 bis 11, **dadurchgekennzeichnet**, daß die Wiegevorrichtung (17) außerhalb der Vorrichtung zum Verpacken angeordnet ist.

13. Vorrichtung nach einem oder mehreren der Ansprüche 7 bis 12, **dadurch gekennzeichnet**, daß der als Auflagefläche für die Päckchen, Würfel oder dgl. ausgebildete Boden der Zellen (5) in vertikaler Richtung verstellbar ausgebildet ist.

## Claims

1. Method of packing pasty products, such as soup pastes, margarine, butter or the like, in the form of packets, cubes or the like, with monitoring and control of the weight of the packets by means of a closed control circuit and a weight adjustment drive, characterised in that the height or thickness of the packets is measured and the actual value thus ascertained is compared, after digitisation, with a preset desired value for the weight, converted from the height or thickness, in a control device and, in the event of deviations of the actual value from the desired value, the feeding of the product is changed accordingly, and in that finally a separate, superimposed check is made of the total weight of a plurality of packets, cubes or the like grouped together in a package, an automatic correction of the desired value being made if the weight varies from the desired value.

2. Method of packing pasty products, such as soup pastes, margarine, butter or the like, in the form of packets, cubes or the like, with monitoring and control of the weight of the packets by means of a closed control circuit and a weight adjustment-drive, characterised in that the height or thickness of the packets, cubes or the like contained in compartments having adjustable bottoms is measured and the actual value thus ascertained is compared, after digitisation, with a preset desired value for the weight, converted from the height or thickness, in a control device and, in the event of deviations of the actual value from the desired value, the feeding of the product is changed accordingly, and in that finally a separate, superimposed check is made of the total weight of a plurality of packets, cubes or the like grouped together in a package, an automatic correction of the position of the compartment bottom being made if the weight varies from the desired value.

3. Method according to Claim 1 or 2, characterised in that the actual value determined is formed by taking an arithmetic average value over [lacuna] predeterminable number of measurements set by a counter and is multiplied by a conversion factor to determine the value of the physical controlled variable.

4. Method according to one or more of Claims 1 to 3, characterised in that the actual value of the heights of the packets, cubes or the like is formed mechanically as an average value from the heights of two packets lying side by side, and in that this average value is used to form the arithmetic average value for pairs of packets lying one behind the other.

5. Method according to one or more of Claims 1 to 4, characterised in that the differential value of the controlled variable deviation, resulting from the comparison of the actual value with the desired value, is used for the time adjustment of the weight adjustment drive, taking into account a multiplication factor.

6. Method according to one or more of Claims 1 to 5, characterised in that the separate checking of the weight is made only after the individual packets, cubes or the like have been introduced into a folding box and is made in respect of all the packets, cubes or the like grouped together in the folding box, and in that the desired value is corrected accordingly, optionally taking into account a freely selectable balance evaluation factor, in the event of a deviation of the total weight from the prescribed desired value, despite correct maintenance of the height or thickness of the individual packets.

7. Apparatus for packing, particularly a wrapping machine, for packing pasty products, such as soup pastes, margarine, butter or the like in the form of packets, cubes or the like, provided with a control device having a measuring device (18) for determining the deviation of at least one measured actual value from a desired value, wherein the measuring device (18) is connected to a control apparatus (19) which cooperates with a weight adjustment drive (21) in such a manner that to the extent of the deviation measured a correction of the amount of product fed or of the filling weight is made for the purpose of carrying out the method according to one or more of Claims 1 to 6, characterised in that the measuring device comprises, in a closed control circuit for automatic weight monitoring, a device (18) for measuring the actual value of the height or thickness of the individual packets, cubes or the like and also a weighing device (17) , disposed downstream of the device measuring height or thickness, for determining the total weight of a plurality of packets, cubes or the like grouped together in a package.

8. Apparatus according to Claim 7, characterised in that the device (18) for measuring height or thickness comprises a position transmitter in the form of a sensor (29) working without contact, preferably working optically.

9. Apparatus according to Claim 8, characterised in that the sensor is in the form of a laser distance sensor (29) and has a signal processing part (31), disposed on a frame part (25) of the apparatus, and a measuring part (32) in the form of a strip fastened on at least one movably mounted pressing ram (26) of the apparatus.

10. Apparatus according to Claim 9, comprising a plurality of adjacent rows of packets, cubes or the like to be packed, characterised in that the signal processing part (31) and the strip (32) are allocated to respective rows lying side by side in pairs.

11. Apparatus according to one or more of Claims 7 to 10, characterised in that the device (18) for measuring height or thickness is disposed inside the packing apparatus, preferably in the region of a pressing station (8) disposed downstream of the metering station (7).

12. Apparatus according to one or more of Claims 7 to 11, characterised in that the weighing device (17) is disposed outside the packing apparatus.

13. Apparatus according to one or more of Claims 7 to 12, characterised in that the bottom of the compartments (5), which is in the form of a support surface for the packets, cubes or the like, is constructed to be adjustable in the vertical direction.

## Revendications

1. Procédé de conditionnement de produits pâteux, tels que des bouillons cubes, de la margarine, du beurre ou similaires, sous forme de petits paquets, de cubes ou similaires, avec contrôle et adaptation du poids des petits paquets par un cycle de réglage fermé et une commande d'ajustage du poids, caractérisé en ce que la hauteur, respectivement l'épaisseur des petits paquets est mesurée, et en ce que la valeur effective ainsi établie est comparée après conversion numérique à une valeur théorique prédéterminée du poids, calculée d'après la hauteur, respectivement l'épaisseur, dans un appareil de commande, et en ce que, dans le cas d'écarts entre la valeur effective et la valeur théorique, la quantité de produit délivrée est modifiée en conséquence, et en ce que l'on effectue finalement une vérification séparée supplémentaire du poids total de plusieurs petits paquets, cubes ou similaires réunis dans un emballage, et en ce qu'il se produit une correction automatique de la valeur théorique dans le cas d'un écart du poids par rapport à la valeur théorique.

2. Procédé de conditionnement de produits pâteux, tels que des bouillons cubes, de la margarine, du beurre ou similaires, sous forme de petits paquets, de cubes ou similaires, avec contrôle et adaptation du poids des petits paquets par un cycle de réglage fermé et une commande d'ajustage du poids, caractérisé en ce que la hauteur, respectivement l'épaisseur des petits paquets, des cubes ou similaires se trouvant dans des cellules à fond ajustable, est mesurée et en ce que la valeur effective ainsi établie est comparée après conversion numérique, à une valeur théorique prédéterminée du poids, calculée d'après la hauteur, respectivement l'épaisseur, dans un appareil de commande, et en ce que, dans le cas d'écarts entre la valeur effective et la valeur théorique, la quantité de produit délivrée est modifiée en conséquence, et en ce que l'on effectue finalement une vérification séparée supplémentaire du poids total de plusieurs petits paquets, cubes ou similaires réunis dans un emballage, et en ce qu'il se produit une correction automatique de la position du fond de la cellule dans le cas d'un écart du poids par rapport à la valeur théorique.

3. Procédé selon la revendication 1 ou 2, caractérisé en ce que la valeur effective déterminée est obtenue à partir du calcul de la moyenne arithmétique d'un nombre de mesures prédéterminé enregistré par un compteur, et est multipliée par un facteur de conversion pour obtenir la valeur de la grandeur physique de réglage.

4. Procédé selon l'une ou plusieurs des revendications 1 à 3, caractérisé en ce que la valeur effective des hauteurs des petits paquets, des cubes ou similaires, est obtenue mécaniquement sous forme de moyenne à partir des hauteurs de deux petits paquets adjacents, et en ce que cette valeur moyenne est utilisée pour obtenir la moyenne arithmétique pour les paires de petits paquets situées les unes derrières les autres.

5. Procédé selon l'une ou plusieurs des revendications 1 à 4, caractérisé en ce que la valeur différentielle de l'écart de réglage résultant de la comparaison entre la valeur effective et la valeur théorique est utilisée pour l'ajustage temporel de la commande d'ajustage du poids, en tenant compte d'un facteur de multiplication.

6. Procédé selon l'une ou plusieurs des revendications 1 à 5, caractérisé en ce que la vérification séparée du poids n'a lieu qu'après l'introduction des petits paquets, cubes ou similaires individuels dans une boîte pliante, et pour tous les petits paquets, cubes ou similaires réunis dans la boîte pliante, et en ce que dans le cas d'un écart du poids total par rapport à la valeur théorique prédéterminée malgré le respect de la hauteur, respectivement de l'épaisseur des petits paquets individuels, le cas échéant, en tenant compte d'un facteur d'évaluation horizontal choisi librement, la valeur théorique est corrigée en conséquence.

7. Dispositif de conditionnement, en particulier machine à envelopper, pour le conditionnement de produits pâteux, tels que des bouillons cubes, de la margarine, du beurre ou similaires, sous forme de petits paquets, de cubes ou similaires, avec une installation de réglage, qui présente un dispositif de mesure (18) pour établir l'écart d'au moins une valeur effective mesurée par rapport à une valeur théorique, le dispositif de mesure (18) étant connecté à un appareil de commande (19), qui coopère avec une commande d'ajustage du poids (21) de telle sorte que dans le domaine de l'écart mesuré, il se produit une correction de la quantité de produit délivré, respectivement du poids de remplissage, pour la mise en oeuvre du procédé selon l'une ou plusieurs des revendications 1 à 6, caractérisé en ce que le dispositif de mesure présente un dispositif (18) de mesure de la valeur effective de la hauteur, respectivement de l'épaisseur des petits paquets, cubes ou similaires individuels dans un cycle de réglage fermé pour le contrôle automatique du poids, ainsi qu'un dispositif de pesage (17) connecté au dispositif de mesure de la hauteur, respectivement de l'épaisseur, directement après celui-ci, pour déterminer le poids total de plusieurs petits paquets, cubes ou similaires réunis dans un emballage.

8. Dispositif selon la revendication 7, caractérisé en ce que le dispositif (18) de mesure de la hauteur, respectivement de l'épaisseur présente un indicateur de position sous forme d'un détecteur (29) fonctionnant sans contact, de préférence optiquement.

9. Dispositif selon la revendication 8, caractérisé en ce que le détecteur est conçu comme un détecteur de distance laser (29) et présente une pièce de traitement du signal (31) disposée sur une pièce du cadre (25) du dispositif et une pièce de mesure (32) sous la forme d'un listel fixé à au moins une matrice de moulage (26) montée mobile, du dispositif.

10. Dispositif selon la revendication 9, avec plusieurs rangées adjacentes de petits paquets, de cubes ou similaires à emballer, caractérisé en ce que la pièce de traitement du signal (31) ainsi que le listel (32) sont affectés, par paire, chaque fois aux rangées adjacentes.

11. Dispositif selon l'une ou plusieurs des revendications 7 à 10, caractérisé en ce que le dispositif (18) de mesure de hauteur, respectivement d'épaisseur est disposé à l'intérieur du dispositif de conditionnement, de préférence au voisinage d'un poste de moulage (8) connecté au poste de dosage (7) directement après celui-ci.

12. Dispositif selon l'une ou plusieurs des revendications 7 à 11, caractérisé en ce que le dispositif de pesage (17) est disposé à l'extérieur du dispositif de conditionnement.

13. Dispositif selon l'une ou plusieurs des revendications 7 à 12, caractérisé en ce que le fond des cellules (5) conçu comme surface de support des petits paquets, cubes ou similaires, est conçu de manière ajustable dans le sens vertical.
